(19) Europäisches Patentamt
European Patent Office
Office européen des brevets

(11) Veröffentlichungsnummer: **0 632 645 A1**

(12) **EUROPÄISCHE PATENTANMELDUNG**

(21) Anmeldenummer: **93110370.9**

(51) Int. Cl.6: **H04N 1/46**

(22) Anmeldetag: **29.06.93**

(43) Veröffentlichungstag der Anmeldung:
**04.01.95 Patentblatt 95/01**

(84) Benannte Vertragsstaaten:
**AT CH DE ES FR GB IT LI NL**

(71) Anmelder: **SCHABLONENTECHNIK KUFSTEIN GESELLSCHAFT M.B.H.**
**P.O. Box 26,**
**Schaftenau**
**A-6330 Kufstein (AT)**

(72) Erfinder: **Fischer, Hannes**
**Prandtauerstrasse 20**
**A-6300 Wörgl (AT)**

(74) Vertreter: **TER MEER - MÜLLER - STEINMEISTER & PARTNER**
**Mauerkircherstrasse 45**
**D-81679 München (DE)**

(54) **Vorlagen-Reproduktionsverfahren und Siebdruckschablone zu seiner Durchführung.**

(57) Bei einem Verfahren zur Erstellung eines Datensatzes zur Reproduktion einer Vorlage auf einer Warenbahn werden zunächst auf einer Probe der Warenbahn in jeweils vorbestimmten Rasterbereichen (16) Basisfarben (F1, F2, F3) in unterschiedlichen Farbmengenanteilen (a1, a2, a3) übereinanderliegend aufgebracht. Sodann werden die einzelnen Rasterbereiche (16) farbmetrisch vermessen, um von den Farbmengenanteilen (a1, a2, a3) abhängige Farbkorrekturwerte zu ermitteln. Danach erfolgt eine punktweise, farbmetrische Vermessung der Vorlage, um jeweils Farbwerte der Vorlage zu erhalten. Die ermittelten Farbwerte werden durch die Farbkorrekturwerte korrigiert, um für jeden Punkt der Vorlage korrigierte Farbmengenanteile zu gewinnen. Diese korrigierten Farbmengenanteile werden gespeichert und können zu einem späteren Zeitpunkt herangezogen werden, um z. B. in Übereinstimmung damit Lochgrößen in Siebdruckschablonen zur Reproduktion der Vorlage zu definieren.

Fig. 3a

Fig. 3b

EP 0 632 645 A1

Die Erfindung betrifft ein Verfahren zur Erstellung eines Datensatzes zur Reproduktion einer Vorlage auf einer Warenbahn gemäß dem Oberbegriff des Patentanspruchs 1 sowie eine Siebdruckschablone zur Durchführung des Verfahrens gemäß dem Oberbegriff des Patentanspruchs 13.

Bisher kann eine künstlerisch gezeichnete Mustervorlage nur in einem relativ langwierigen und umständlichen Verfahren in eine Schablonengravur umgesetzt werden, um damit Druckschablonen auszurüsten und in einem nachfolgenden Druckvorgang die Mustervorlage in großer Zahl auf einem textilen Gewebe oder Gewirk zu reproduzieren. Besonders arbeitsintensiv gestaltet sich dieses Verfahren, wenn es um die Anfertigung von Halbtongravuren geht, wenn also in der bunten Mustervorlage sehr viele und größtenteils nur geringfügig unterschiedliche Farbtöne vorkommen.

Die Schwierigkeiten resultieren u. a. daraus, daß man beim Bedrucken von Textilien nicht auf die Methoden der Trichromie, also des Dreifarbendrucks, zurückgreifen kann, wie dies z. B. beim Bedrucken von Papier der Fall ist. Unter Dreifarbendruck versteht man bekanntlich jene Drucktechnik, bei welcher die physiologische Erscheinung des menschlichen Farbempfindens ausgenutzt wird, daß das Auge reflektierte Lichtfarben aus Quellen, die es nicht mehr aufzulösen vermag, als Mischfarbe empfindet. Werden also Farbpunkte, die aus den Farben Blau, Grün oder Rot bestehen, in sehr geringer Größe knapp nebeneinander gesetzt, so empfängt das Auge eine Farbmischung. Z. B. werden kleine eng nebeneinanderstehende Grün- und Rotpunkte als gelb empfunden, sofern es sich bei den Farbpunkten um lichtemittierende Punkte, wie etwa bei einem Farbmonitor, handelt.

Dieser additiven Farbmischung steht die subtraktive Farbmischung z. B. durch Filter gegenüber. Auch die meisten Farbdruckverfahren basieren auf der subtraktiven Mischung von Farben. Die Schwierigkeit wächst allerdings auf diesem Sektor, wenn die relative Lage der Farbpigmente zueinander weitgehend dem Zufall überlassen bleibt. Genau dies ist beim Textildruck infolge der Mischung großer Farbmengen auf dem textilen Substrat der Fall. Darüber hinaus treten insbesondere bei der subtraktiven Farbmischung weitere Schwierigkeiten infolge des unterschiedlichen Aufziehverhaltens der Farbstoffe auf. Auch wird während eines textilen Druckvorgangs die Warenbahn durch die Rakel stets gepreßt und gleich anschließend wieder entlastet, so daß die bereits auf der Warenbahn befindliche Druckfarbe aus den durch die Fasern gebildeten Kapillaren strömt und anschließend wieder in diese zurückströmt. Dieser Strömungsvorgang führt bei mit unterschiedlichen Druckfarben eingefärbten kleinen Flächenbereichen der Warenbahn zu einer Mischung der nassen Farbpasten, die ebenfalls nur schwer kontrolliert werden kann. Das reproduzierte Muster weicht daher in seinen Farben häufig von der künstlerisch gezeichneten Mustervorlage bzw. der Originalvorlage ab.

Der Erfindung liegt die Aufgabe zugrunde, ein Verfahren der eingangs genannten Art zu schaffen, mit dem sich künstlerische Mustervorlagen noch genauer hinsichtlich ihrer Farbgestaltung auf einer textilen Warenbahn reproduzieren lassen. Ziel der Erfindung ist es außerdem, eine zur Durchführung des genannten Verfahrens geeignete Siebdruckschablone anzugeben.

Die verfahrensseitige Lösung der gestellten Aufgabe ist im kennzeichnenden Teil des Patentanspruchs 1 angegeben. Dagegen findet sich die vorrichtungsseitige Lösung im kennzeichnenden Teil des Patentanspruchs 13.

Vorteilhafte Ausgestaltungen der Erfindung sind den jeweils nachgeordneten Unteransprüchen zu entnehmen.

Ein Verfahren nach der Erfindung zur Erstellung eines Datensatzes zur Produktion einer Vorlage auf einer Warenbahn zeichnet sich durch folgende Schritte aus:
- auf einer Probe der Warenbahn werden in Jeweils vorbestimmten Rasterbereichen RB Basisfarben F1, F2, F3 in unterschiedlichen Farbmengenanteilen a1, a2, a3 übereinanderliegend aufgebracht,
- die einzelnen Rasterbereiche RB werden farbmetrisch vermessen, um von den Farbmengenanteilen a1, a2, a3 abhängige Farbkorrekturwerte zu ermitteln,
- es erfolgt eine punktweise, farbmetrische Vermessung der Vorlage, um jeweils Farbwerte der Vorlage zu ermitteln,
- die ermittelten Farbwerte werden durch die Farbkorrekturwerte korrigiert, um für jeden Punkt der Vorlage korrigierte Farbmengenanteile zu erhalten, und
- es werden die korrigierten Farbmengenanteile gespeichert.

Erfindungsgemäß wird also mit Hilfe der Basisfarben zunächst ein Probedruck auf derjenigen Warenbahn erzeugt, auf der später auch die künstlerische Vorlage reproduziert werden soll. Probedruck und Reproduktion der Vorlage erfolgen unter exakt denselben Bedingungen. Dabei werden beim Probedruck in denjeweiligen Rasterbereichen zunächst die Basisfarben übereinanderliegend aufgedruckt, und zwar in unterschiedlichen Farbmengenanteilen. Die unterschiedlichen Einflüsse, wie z. B. das Mischungsverhalten der Basisfarben, deren Aufziehverhalten auf die Warenbahn, usw. werden dann bei der anschließenden farbmetrischen Vermessung der einzelnen Rasterbereiche unmittelbar mit erfaßt und bestimmen somit auch direkt die sich auf der Grundlage der Messung ergebenden Farbkorrekturwerte. Werden die bei der punktweisen farbmetrischen Vermessung der Vorlage erhaltenen Farbwerte durch die zuvor ermittelten Farbkorrekturwerte korrigiert, so läßt sich daher eine hinsichtlich der Farbtreue noch zufriedenstellendere Reproduktion der künstlerischen Mustervorlage erzeugen. Dabei können die durch die Farbkorrekturwerte korrigierten Farbwerte der Vorlage oder die jeweils zugehörigen Farbmengenanteile zunächst in einem elektronischen Speicher abgelegt werden, um später zwecks Anfertigung einer Siebdruckschablone herangezogen zu werden. Dabei bestimmen sich dann die Durchgangsöffnungen in der Siebdruckschablone für jede Farbe in Übereinstimmung mit den jeweils zwischengespeicherten Farbmengenanteilen dieser Farbe. Selbstverständlich läßt sich auch zuerst die künstlerische Vorlage farbmetrisch vermessen und dann der Probedruck, wobei alle Meßwerte in geeigneter Weise zwischengespeichert werden können.

Wegen der schon beschriebenen Effekte ist beim Textildruck das Ergebnis einer Farbmischung von sehr weit auseinanderliegenden Farbtönen besonders schwer bestimmbar. Statt einem gewünschten bunten Farbeindruck erhält man daher oft dunkle Farbeindrücke, also etwa grau bis schwarz. Damit auch hier ein ansprechendes Ergebnis erzielt wird, werden gemäß der Erfindung weiterhin Mischfarbtöne aus eng benachbarten Farbtönen erzeugt, weil diese auch bei einem Ineinanderfließen der Farben nicht so leicht zu einer Bevorzugung grauer oder dunkler Farbmischungen führen. Dadurch kann man lebhaftere, trotzdem aber weiche Farbgestaltungen erzielen.

Nach einer besonders vorteilhaften Ausgestaltung der Erfindung werden zur Ermittlung der von den Farbmengenanteilen abhängigen Farbkorrekturwerte die bei der farbmetrischen Vermessung der einzelnen Rasterbereiche der Warenbahnprobe erhaltenen Farbvektoren mit solchen verglichen, die sich aufgrund einer farbvektoriellen Rechnung unter Zugrundelegung der Mengenanteile der Basisfarben für den jeweiligen Rasterbereich ergeben.

Nach einer anderen sehr vorteilhaften Weiterbildung der Erfindung können zur Ermittlung der von den Farbmengenanteilen abhängigen Farbkorrekturwerte auch solche bei der farbmetrischen Messung der einzelnen Rasterbereiche der Warenbahnprobe erhaltenen Farbvektoren herangezogen werden, die jeweils zu den bei der punktweisen, farbmetrischen Vermessung der Vorlage ermittelten Farbvektoren am nächsten liegen. Dabei lassen sich als nächstliegende Farbvektoren solche heranziehen, die durch Interpolation mehrerer Farbvektoren von Rasterbereichen der Warenbahnprobe ermittelt worden sind, welche zum Farbvektor der Vorlage benachbart liegen. Zur Herstellung des Probedrucks werden drei Basisfarben verwendet, die allein, paarweise und zu dritt in den Rasterbereichen aufgedruckt werden. Werden mehr als drei Basisfarben verwendet, so werden von ihnen jeweils drei in einer Gruppe allein, paarweise und zu dritt in den Rasterbereichen aufgedruckt. Im allgemeinen reichen drei Basisfarben oder zu Dreiergruppen zusammengefaßte Basisfarben aus, um hinreichend genaue Farbkorrekturwerte zur Korrektur der Farbwerte der Vorlage ermitteln zu können. In Ausnahmefällen können aber auch mehr als drei Farben oder weniger verwendet werden.

Sollen die Farbmengenanteile der in den jeweiligen Rasterbereichen vorhandenen Basisfarben quantitativ bestimmt werden, so werden die jeweiligen Basisfarben, die beim Probedruck verwendet werden, in gleicher Weise außerhalb eines durch die Rasterbereiche definierten Rasters separat auf die Probe der Warenbahn aufgebracht. Die einzelnen Basisfarben werden also separat entsprechend den jeweils verwendeten Mengenanteilen auf die Warenbahn aufgedruckt, um anschließend herausgeschnitten und gewogen zu werden.

Das Aufbringen der Basisfarben auf die Warenbahn in unterschiedlichen Mengenanteilen kann auf verschiedene Weise erfolgen. Hierzu kann beispielsweise eine Lochschablone verwendet werden, mit der sich die Farbmengenanteile dadurch bestimmen lassen, daß unterschiedliche Lochgrößen der Lochschablone vorgegeben werden. Bei drei Basisfarben kommen dann drei Lochschablonen zum Einsatz, und zwar für jede Basisfarbe eine. Geeignet angeordnete Rasterbereiche in den jeweiligen Lochschablonen sorgen dann für das gewünschte Übereinanderdrucken der Basisfarben mit den gewünschten Mengenanteilen. Die Farbmengenanteile lassen sich auch durch unterschiedliche Lochdichten der Lochschablone vorgeben. Jede der Lochschablonen weist wenigstens einen Raster mit mehreren gleich großen und in Form eines gleichseitigen Dreiecks angeordneten Rasterberelchen auf, die jeweils eine Durchlässigkeit aufweisen, die rasterberelchsweise von der Spitze des Dreiecks in Richtung zur gegenüberliegenden Dreiecksseite hin abnimmt. Bei drei derart ausgebildeten Lochschablonen sind die Raster um 120° gegeneinander versetzt, so daß sich dann die Basisfarben in den unterschiedlichen Mengenanteilen auf die Probe der Warenbahn aufdrucken lassen. Dabei kann die Zahl der Rasterbereiche entlang einer Seitenkante des Dreiecks vier oder mehr betragen.

Die Erfindung wird nachfolgend unter Bezugnahme auf die Zeichnung näher beschrieben. Es zeigen:

**Figur 1** ein Diagramm zur Erläuterung von Farbvektoren in einem Farbraum,

**Figur 2** ein Diagramm zur Erläuterung einer Abweichung zwischen Farbvektoren, von denen der eine durch Aufdrucken verschiedener Farben in unterschiedlichen Farbmengenanteilen auf einer Warenbahn und anschließendes Ausmessen und der andere durch Berechnung anhand der verwendeten Farbmengenanteile ermittelt worden ist,

**Figuren 3a und 3b** in Form eines Dreiecks angeordnete Rasterbereiche sowie einen Testraster,

**Figuren 4, 5 und 6** jeweils unterschiedlich ausgerichtete und Rasterbereiche enthaltende Dreiecke mit zugehörigem Testraster auf jeweils unterschiedlichen Schablonenkörpern,

**Figur 7** einen Probedruck auf einer Warenbahn,

**Figuren 8a bis 8d** Abwicklungen von Schablonenkörpern mit unterschiedlich ausgerichteten und Rasterbereiche enthaltenden Dreiecken,

**Figuren 9a bis 9d** perspektivische Ansichten der Schablonenkörper nach den Figuren 8a bis 8d,

**Figuren 10a bis 10e** Abwicklungen weiterer Schablonenkörper mitunterschiedlich ausgerichteten und Rasterbereiche enthaltenden Dreiecken,

**Figuren 11a bis 11e** Abwicklungen noch weiterer Schablonenkörper mit unterschiedlich ausgerichteten und jeweils Rasterbereiche enthaltenden Dreiecken,

**Figur 12** eine optische Abtasteinrichtung zur farbmetrischen Vermessung einer Vorlage, und

**Figur 13** ein Blockschaltbild des Gesamtaufbaus einer Vorrichtung zur Durchführung des erfindungsgemäßen Verfahrens.

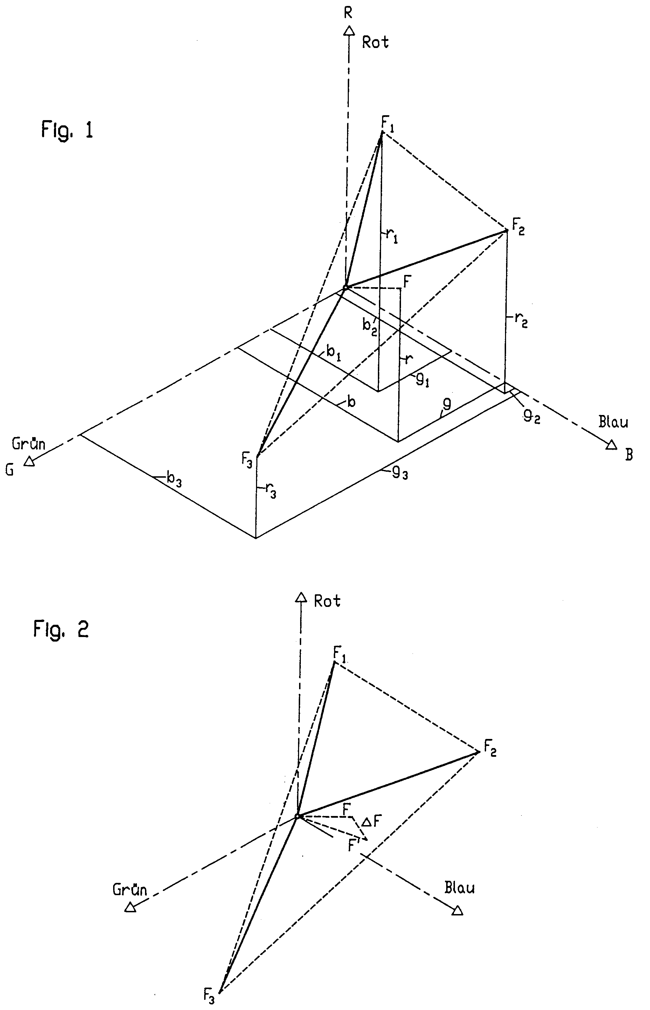

Zum besseren Verständnis der Erfindung soll zunächst anhand der Figur 1 der Fall einer Farbmischung betrachtet werden, die ausschließlich auf einer additiven Mischung des reflektierten Lichts beruht. Zu diesem Zweck wird angenommen, daß mehrere Druck- bzw. Basisfarben definiert wurden und daß von diesen drei Farben, die sich nicht kraß voneinander unterscheiden sollen, drei sehr kleine aber unterschiedlich große Farbtupfen auf einer sehr dünnen Warenbahn unmittelbar nebeneinanderliegend hergestellt wurden. Es wird dann von jeder dieser drei Farben das auffallende Weißlicht gefiltert reflektiert, so daß es sich für das hinreichend weit entfernte Auge zu einem neuen Farbton mischt. Diese Verhältnisse sind in Figur 1 dargestellt, die einen Ausschnitt aus dem RGB-Farbraum (Rot-/Grün-/Blau-Farbraum) zeigt. Die drei definierten Druck- bzw. Basisfarben F1, F2, F3 lassen sich in Ihre roten, grünen und blauen Farbanteile zerlegen. Man enthält entsprechend für die Farbe F1 die Anteile r1, g1 und b1. Diese sind in Form der Komponenten des Vektors der Farbe F1 im RGB-Farbraum dargestellt. Gleiches gilt für die Vektoren der Farben F2 und F3. Die Endpunkte dieser Vektoren spannen im RGB-Raum ein ebenes Dreieck auf.

Dieses Dreieck bildet wiederum zusammen mit den Farbvektoren F1, F2 und F3 eine Pyramide, deren Spitze im Ursprung des RGB-Koordinationssystems liegt und deren Grundfläche das eben beschriebene Dreieck ist. In Abhängigkeit von den Größenverhältnissen der drei Farbtupfen werden sich die RGB-Anteile der drei Farben F1 bis F3 zu einem resultierenden Farbvektor F zusammensetzen, und dieser entspricht der Farbe des entstehenden Lichteindruckes. Dies gilt allerdings nur, wenn zwischen den Farbtupfen keine unbedruckten Stellen des Warenbahnhintergrundes verbleiben. Befinden sich zwischen den Farbtupfen weiße oder farbige Flecken des Warenbahnhintergrundes, so tritt ein weiterer der von dort unmittelbar reflektierten Farbe im Vektor F der Mischfarbe hinzu.

Infolge der Addition der Farbvektoren ist jeder der Farbtöne innerhalb der beschriebenen Pyramide erreichbar. Dabei entspricht die Größejedes einzelnen der zu addierenden Farbvektoren dem durch die Tupfengröße gegebenen relativen Anteil der jeweiligen Basisfarbe.

Meist kann man aber mit Rücksicht auf die Kleinheit der erforderlichen Farbtupfen eine Mischung der Farben im flüssigen Zustand nicht verhindern. Dabei treten zusätzlich verschiedene optische und chemische Probleme auf. Wie bereits eingangs erwähnt, ist es nicht vorherzusehen, ob sich Farbpigmente neben- oder übereinanderliegend ablagern, wobei im ersten Fall additive Farbmischungsregeln und im zweiten Fall subtraktive Farbmischungsregeln gelten. Auch können bei dünnen Pigmentschichten Interferenzerscheinungen in Folge ihrer Schichtdicke auftreten und schließlich ist auch eine Farbtonänderung dadurch möglich, daß die Farbstoffe mit unterschiedlicher Geschwindigkeit im nachfolgenden Dämpfungs- und/oder Trocknungsprozeß und daraus folgend mit unterschiedlicher Intensität auf die Fasern aufziehen. Dies ist gerade bei subtraktiven Farbstoffen sehr häufig der Fall, die für die Druckbemusterung von textilen Flächengebilden bzw. Warenbahnen gerne verwendet werden.

Aus diesem Grunde werden gemäß der Erfindung nur im RGB-Raum benachbarte Farbtöne zur Farbmischung verwendet, weil bei diesen zumindest ein Teil der geschilderten Nebenwirkungen nicht so stark in Erscheinung tritt.

Darüber hinaus wird bei der Erfindung mit derartigen benachbarten Farbtönen ein Probedruck angefertigt, wobei diese Farbtöne durch einen geeigneten Schablonensatz in unterschiedlichen Mengenverhältnissen wenigstens teilweise übereinanderliegend auf einer Warenbahn gedruckt und die entstehenden Mischtöne farbmetrisch vermessen werden. Wie noch erläutert werden wird, kann dieser Druckvorgang auch durch einen Düsenspritzprozeß ersetzt werden.

Bei diesem Druck- oder Spritzprozeß wird bei einem Teil der Druckproben eine Abweichung der RGB-Komponenten der durch Messung festgestellten Farbvektoren der Mischfarben gegenüber den Komponenten jener Vektoren aufscheinen, die sich aufgrund einer farbvektoriellen Rechnung unter Zugrundelegung der gleichen Farben bei gleichen Mengenanteilen der Basisfarben ergeben.

Dies und der hieran anschließende Verfahrensschritt sind in Figur 2 veranschaulicht. Es werden hier wieder drei Farbvektoren F1, F2 und F3 gezeigt, die den drei für die Farbüberlagerung ausgewählten Basisfarben entsprechen sollen. Die additionstheoretische Berechnung der Mischung unter Berücksichtigung der Farbmengenanteile der Basisfarben ergibt den Vektor F für die Mischfarbe. Demgegenüber ergibt die Messung der RGB-Anteile der im tatsächlichen Druckversuch hergestellten Mischfarbe den Vektor F'. Für den Differenzvektor ΔF läßt sich dann eine Transformationsbeziehung ermitteln, die ihrerseits Grundlage für die Berechnung von Korrekturwerten ist, die zur Korrektur derjenigen Farbvektoren herangezogen werden, die infolge einer farbmetrischen Vermessung der zu reproduzierenden Vorlage erhalten werden.

Da diese Transformationsbeziehung für die Vektoren der definierten Druckfarben F1, F2 und F3 keinen Fehlbetrag ergeben darf, andererseits der Bereich im RGB-Raum zwischen diesen Farben kleingehalten werden soll, kann ein Transformationspolynom mindestens zweiter Ordnung verwendet werden, das sich ggf. mit Korrekturgliedern höherer Ordnung ergänzen läßt. Dabei kann der durch die o. g. Basisfarben eingeschlossene Bereich des RGB-Raums auch durch mindestens drei Stützpunkte weiter unterteilt werden, um das Transformationspolynom in den durch die Stützpunkts- und Farbvektoren begrenzen Bereichen durch eine lineare Näherung zu ersetzen.

Unter Verwendung eines dieser Transformationspolynome wird nun eine Benutzerfarbstofftabelle erstellt, welche die Farbvektoren des RGB-Raums den im Mischungsvorgang des Druckprozesses erreichbaren Farbvektoren zu ordnet und mittels welcher von einem gewünschen Farbton auf die Mengen der hierfür notwendigen Druckfarben F1 bis F3 geschlossen werden kann. Der gewünschte Farbton ist hier ein durch farbmetrische Vermessung der Vorlage erhaltener Farbvektor. Die Ergebnisse dieser Rechnung werden für die Bestimmung der Größe und der Verteilung der Öffnungen für den Farbdurchtritt in der der jeweiligen Farbe F1 bis F3 zugeordneten Siebdruckschablone verwendet, um durch derartige Siebdruckschablonen dann die Vorlage zu reproduzieren.

Nachfolgend wird im einzelnen beschrieben, wie anhand des Probedrucks auf die Farbmengenanteile a1, a2 und a3 geschlossen werden kann, um einen Punkt der Vorlage möglichst farbgetreu reproduzieren zu können.

Mit den Basisfarben bzw. Basisfarbstoffen (= flüssige Druckpasten) F1, F2 und F3 wird ein Probedruck auf einer solchen Warenbahn angefertigt, die später auch für die Reproduktion der Vorlage benutzt wird, und es werden hierbei die Farben in unterschiedlichen Mengenverhältnissen ineinander gedruckt. Die Farbmengenanteile der Basisfarbstoffe an einer Mischfarbe seien:

- a1 Farbmengenanteil von F1,
- a2 Farbmengenanteil von F2,
- a3 Farbmengenanteil von F3.

Die relativen R-, G-, B- Intensitäten der Basisfarben sind:

- r1, g1, b1 für F1
- r2, g2, b2 für F2
- r3, g3, b3 für F3

Die Farbvektoren im RGB-Raum ergeben sich dann für die Basisfarben F1 bis F3 zu:

$$
\begin{aligned}
\vec{F1} &= r1 \times \vec{R} + g1 \times \vec{G} + b1 \times \vec{B} \\
\vec{F2} &= r2 \times \vec{R} + g2 \times \vec{G} + b2 \times \vec{B} \qquad\qquad (1) \\
\vec{F3} &= r3 \times \vec{R} + g3 \times \vec{G} + b3 \times \vec{B}
\end{aligned}
$$

Nach Anfertigung des Probedrucks wird zunächst erwartet, daß einer durch Mischdruck entstandenen Farbe ein Vektor entspricht, dessen Farbwert nach der folgenden linearen Beziehung berechnet werden können sollte: Theoretischer Farbvektor der Mischfarbe

$$= a1 \times \vec{F1} + a2 \times \vec{F2} + a3 \times \vec{F3} =$$

$$= (a1 \times r1 + a2 \times r2 + a3 \times r3) \times \vec{R} +$$
$$+ (a1 \times g1 + a2 \times g2 + a3 \times g3) \times \vec{G} + \qquad (2)$$
$$+ (a1 \times b1 + a2 \times b2 + a3 \times b3) \times \vec{B}$$

Diese Erwartung wird jedoch nur in seltenen Fällen tatsächlich erfüllt. Durch das unterschiedliche Aufziehverhalten der Farbstoffe und andere Einflüsse weicht der gemessene Farbvektor $\vec{MF}$ der Probedruckmischfarbe von dem obigen Rechenergebnis ab (M bzw. m bedeuten Mischfarbe):

$$\vec{MF} = rm \times \vec{R} + gm \times \vec{G} + bm \times \vec{B} \neq (a1 \times r1 + a2 \times r2 + a3 \times r3) \times \vec{R} +$$
$$+ (a1 \times g1 + a2 \times g2 + a3 \times g3) \times \vec{G} +$$
$$+ (a1 \times b1 + a2 \times b2 + a3 \times b3) \times \vec{B} \qquad (3)$$

Die entstandenen Mischfarbenvektoren müssen korrigiert werden. Es soll daher folgender Ansatz mit Korrekturgliedern versucht werden:

$$\vec{MF} = a1 \times \vec{F1} + a2 \times \vec{F2} + a3 \times \vec{F3} +$$
$$+ a1 \times (a1 - 1) \times k1 \times \vec{F1} + a2 \times (a2-1) \times k2 \times \vec{F2} + a3 \times (a3 - 1) \times k3 \times \vec{F3}$$
$$(4)$$

Dieser Ansatz weist folgende Eigenschaften auf:

1. Die Korrekturglieder sind linear vom Farbvektor der jeweiligen Basisfarbe und quadratisch von deren Farbmengenanteil abhängig.

2. Die Korrekturglieder verschwinden, wenn der Farbmengenanteil der Basisfarbe gleich 0 oder gleich 1 ist.

Hiermit werden folgende notwendige Forderungen erfüllt:

1. Ein Farbkorrekturvektor kann selbst nur wieder eine Linearkombination von anderen Farbvektoren sein.

2. Besteht die Mischfarbe nur aus einer Basisfarbe, so muß der Korrekturvektor gleich Null werden.

3. Entfällt eine Basisfarbe ganz, so darf für diese auch keine Farbkorrektur erforderlich werden.

Durch den genannten Probedruck lassen sich z. B. achtzehn mit Mischfarben ausgefüllte Rasterbereiche erzeugen, in denenjeweils die Basisfarben In unterschiedlichen Farbmengenanteilen übereinanderliegend aufgebracht sind. Dabei werden also achtzehn verschiedene Mischfarben erhalten. Jede dieser Mischfarben wird nun einmal nach ihren Rot-, Grün- und Blauanteilen vermessen und es wird fürjede Mischfarbe die aus (4) folgende Beziehung aufgestellt:

$$\vec{MF}_i = rm_i \times \vec{R} + gm_i \times \vec{G} + bm_i \times \vec{B} = a1_i \times \vec{F1} + a2_i \times \vec{F2} + a3_i \times \vec{F3} +$$
$$+ a1_i \times (a1_i - 1) \times k1 \times \vec{F1} + a2_i \times (a2_i - 1) \times k2 \times \vec{F2} + a3_i \times (a3_i - 1) \times k3 \times \vec{F3}$$
$$(5)$$

($_i$ geht hier und in den folgenden Beziehung von 1 bis 18)

Setzt man in (5) die Beziehung (1) ein, so erhält man aus der rechten Seite:

$$\begin{aligned}
MFi = [a1_i \times r1 + a2_i \times r2 + a3_i \times r3 + a1_i \times (a1_i - 1) \times k1 \times r1 + \\
+ a2_i \times (a2_i - 1) \times k2 \times r2 + a3_i \times (a3_i - 1) \times k3 \times r3] \times \vec{R} + \\
+ [a1_i \times g1 + a2_i \times g2 + a3_i \times g3 + a1_i \times (a1_i - 1) \times k1 \times g1 + \\
+ a2_i \times (a2_i - 1) \times k2 \times g2 + a3_i \times (a3_i - 1) \times k3 \times g3] \times \vec{G} + \\
+ [a1_i \times b1 + a2_i \times b2 + a3_i \times b3 + a1_i \times (a1_i - 1) \times k1 \times b1 + \\
+ a2_i \times (a2_i - 1) \times k2 \times b2 + a3_i \times (a3_i - 1) \times k3 \times b3] \times \vec{B}
\end{aligned}$$

$$(6)$$

Durch Vergleich mit der linken Seite von (5) folgt:

$rm_i = a1_i; \times r1 + a2_i \times r2 + a3_i \times r3 + a1_i \times (a1_i - 1) \times k1 \times r1 + + a2_i \times (a2_i - 1) \times k2 \times r2 + a3_i \times (a3_i - 1) \times k3 \times r3$     (7a)

$gm_i = a1_i \times g1 + a2_i \times g2 + a3_i \times g3 + a1_i \times (a1_i - 1) \times k1 \times g1 + + a2_i \times (a2_i - 1) \times k2 \times g2 + a3_i \times (a3_i - 1) \times k3 \times g3$     (7b)

$bm_i = a1_i \times b1 + a2_i \times b2 + a3_i \times b3 + a1_i \times (a1_i - 1) \times k1 \times b1 + + a2_i \times (a2_i - 1) \times k2 \times b2 + a3_i \times (a3_i - 1) \times k3 \times b3$     (7c)

Mit den bekannten Größen r1, g1, b1, r2, g2, b2, r3, g3, b3 (= Intensitätswerte der Basisfarben, $a1_i$, $a2_i$, $a3_i$ (Farbmengenanteile der Baisfarben an der Mischfarbe $_i$), und den gemessenen Farbintensitätswerten $rm_i$, $gm_i$, $bm_i$ für die jeweilige Mischfarbe folgen also 3 mal 18 = 48 lineare Gleichungen für die drei unbekannten Parameter k1, k2 und k3. Diese Parameter müssen daher nach den Grundsätzen der Ausgleichsrechnung ermittelt werden.

Für die drucktechnische Reproduktion der Vorlage (künstlerischen Minstervorlage) kann man jetzt den umgekehrten Weg zur Bestimmung der Mengenanteile a1, a2 und a3 der Basisfarben F1 bis F3 an einem gewünschten Farbton der Vorlage beschreiten.

Man mißt die Farbwerte der Vorlage rv, gv und bv, setzt diese bekannten Werte in die linken Seiten der drei quadratischen Gleichungen (7a) bis (7c) ein und löst diese nach a1, a2 und a3 auf.

Wegen der großen Zahl der verfügbaren Gleichungen (7a) bis (7c) bei Ermittlung der Parameter k1 bis k3 könnte man daran denken, diese Parameter durch einen günstigen Ansatz zu erhöhen. Ein solcher Ansatz könnte so aussehen:

$$\begin{aligned}
\vec{MF} = a1 \times \vec{F1} + a2 \times \vec{F2} + a3 \times \vec{F3} + \\
a1 \times (a1 - 1) \times k1 \times \vec{F1} + a2 \times (a2 - 1) \times k2 \times \vec{F2} + a3 \times (a3 - 1) \times k3 \times \vec{F3} + \\
a1 \times (a1 - 1) \times a2 \times (a2 - 1) \times k4 \times (\vec{F1} - \vec{F2}) + \\
+ a2 \times (a2 - 1) \times a3 \times (a3 - 1) \times k5 \times (\vec{F2} - \vec{F3}) + \\
+ a3 \times (a3 - 1) \times a1 \times (a1 - 1) \times k6 \times (\vec{F3} - \vec{F1}) \qquad (8)
\end{aligned}$$

Setzt man auch hier wieder für die Basisfarben die Beziehungen (1) ein, so erhält man durch einen Rechnungsgang wie oben beschrieben für die RGB-Werte einer Mischfarbe ein System aus drei Gleichungen ganz ähnlich den Beziehungen (7a) bis (7c). Für achtzehn Mischfarben folgen wiederum 3 mal 18 Gleichungen, aus welchen jetzt die besten Näherungen für die Koeffizienten k1 bis k6 ermittelt werden können.

Aus diesen Koeffizienten und den RGB-Werten einer Wunschfarbe (= Farbe einer künstlerischen Vorlage) lassen sich andererseits anhand dieses Gleichungssystems die Mengenanteile a1 bis a3 der Basisfarben zur drucktechnischen Reproduktion dieser Wunschfarbe rückermitteln.

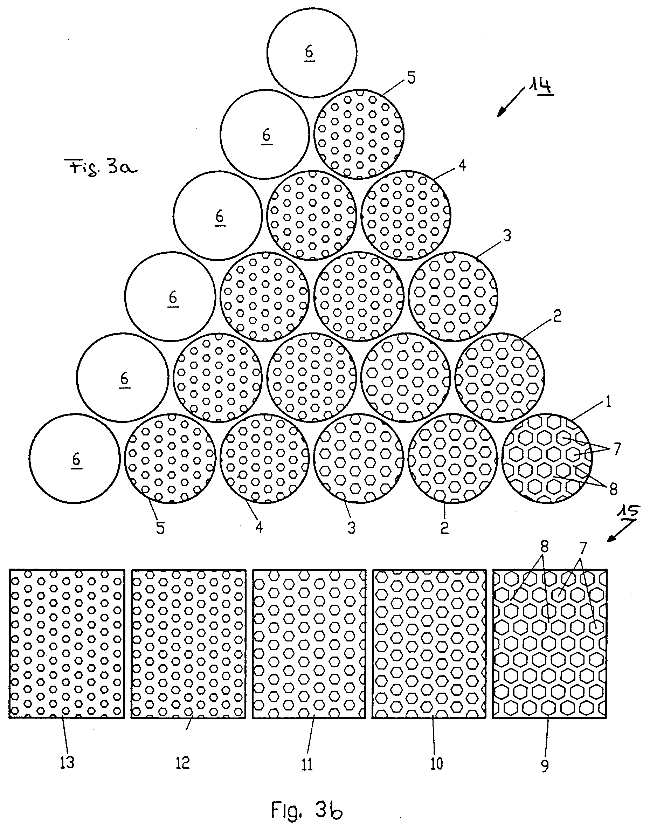

Die Figuren 3a, 3b und 4 bis 7 zeigen, wie beispielsweise die Gravur für einen Schablonensatz ausgestaltet werden kann, der zur Anfertigung des Probedrucks erforderlich ist, um in diesem Fall achtzehn Mischfarben zu erhalten.

Zu einem solchen Schablonensatz gehören drei sehr ähnlich gravierte Schablonen, die aus einer sehr dünnen Nickelfolie bestehen und an vorbestimmten Stellen verschiedene perforierte Bereiche bzw. Rasterbereiche aufweisen. Solche Schablonen werden im allgemeinen rein galvanoplastisch erzeugt, was bedeutet, daß die Schablonen mit ihren Öffnungen in einem galvanischen Nickelbad durch schichtenweises Ablagern von Nickel auf einer durch isolierende Fotolackpunkte abgedeckten Matrize entstehen.

Die Figur 3a zeigt einen dreieckförmig begrenzten Bereich 14 in einer Rotationsdruckschablone. Innerhalb des dreieckförmig begrenzten Bereichs 14 befinden sich einundzwanzig kreisförmige Unterbereiche 1 bis 6, welche die unterschiedlichen Perforationen aufweisen. Diese Perforationen entsprechen einem Hexagonalraster, das heißt, die Öffnungen dieser Perforationen entsprechen einem sehr kleinen, regelmäßigen Sechseck 7. Zwischen diesen Sechsecken 7 liegen Stege 8. Die sechseckförmigen Öffnungen 7 lassen sich nun in verschiedener Weise variieren, wobei insbesondere das Verhältnis zwischen der lichten Weite der Öffnung und der Breite der Stege sehr stark die Menge der hindurchtretenden Farbpaste beeinflußt, wenn mit solchen Schablonen ein Probedruck ausgeführt wird. Natürlich muß die Stegbreite ausreichen, um die während des Druckvorgangs auftretenden Beanspruchungen aushalten zu können, und auch das galvanoplastische Herstellverfahren läßt keine beliebig dünnen Stege zu.

Im Unterbereich 1 wird die Perforation (auch Gravur genannt) so gewählt, daß bei noch ausreichender Festigkeit die maximal denkbare Farbmenge durch die in diesem Bereich vorgesehenen Öffnungen 7 austreten kann. In den beiden kreisförmigen Unterbereichen 2 wird eine Gravur vorgesehen, die gegenüber dem Unterbereich 1 um etwa 20% weniger Farbstoff durch die Öffnungen 7 hindurchtreten läßt. Durch entsprechende Wahl der Gravur tritt nun fortfolgend in den Bereichen 3, 4 und 5 um jeweils 20% Farbpaste weniger aus, so daß in den Unterbereichen 5 nur mehr 20% der Farbstoffmenge durch die Öffnungen 7 austreten kann, welche im Unterbereich 1 die Schablone verläßt. Aufjene Stellen der Warenbahn, auf welche von den Unterbereichen 2 bis 5 Farbstoff aus der hier betrachteten Schablone aufgetragen wird, wird auch Farbstoff aus den beiden anderen zum gleichen Satz gehörenden Schablonen auf die Warenbahn aufgetragen. Auf die Stellen der Warenbahn, die unter dem Bereich 1 liegen, wird nur von der vorliegenden Schablone Farbpaste auf die Warenbahn appliziert, während die kreisförmigen Bereiche 6 schließlich vollkommen undurchlässig sind und sich durch nichts von den nicht gravierten Bereichen der Schablone unterscheiden. In diesen Bereichen wird nur von den beiden anderen zum Satz gehörenden Schablonen Farbe auf die Warenbahn aufgetragen.

Neben den Gravuren im dreieckförmig begrenzten Bereich 14 gibt es auf dieser Schablone noch einen Testraster- bzw. rechteckförmig begrenzten Bereich 15, in welchem in den rechteckigen (ggf. quadratischen) Unterbereichen 9 bis 13 jene gleichartigen Gravuren eingebracht sind, die auch in den Bereichen 1 bis 5 zu finden sind. Diese Bereiche werden auf dem Warenbahnprobestück ausschließlich auf solche Stellen abgedruckt, auf welche keine der anderen beiden Schablonen drucken kann. Diese rechteckförmigen Bereiche 15 werden später aus der Warenbahn herausgeschnitten, und es wird das Gewicht der von der jeweiligen Gravur aufgebrachten Druckfarbe anhand dieser Ausschnitte ausgewogen. Mit Hilfe dieser Maßnahme können die Abweichungen der Farbmengen von ihrer Sollmengen berechnet werden, die sich aufgrund von Einflußgrößen wie Warenbahnstruktur, Rakeldruck, Rakelform, Viskosität der Farbpaste, und ähnlichem, ergeben.

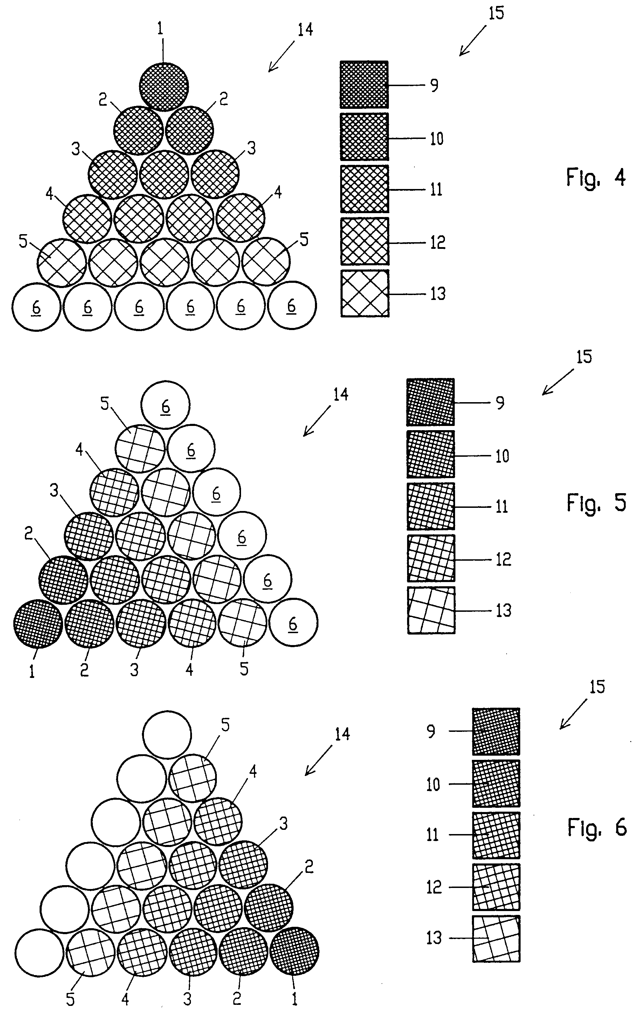

Die Figuren 4 bis 6 zeigen nun zueinander lagerichtig die Gravurbilder, die in die drei Schablonen des Probedruck-Schablonensatzes eingebracht sind. Durch jede dieser Schablonen wird nur eine der Basisfarben gedruckt.

In Figur 4 ist nochmals der dreieckförmig begrenzte Bereich 14 dargestellt, in welchem die gravierten Unterbereiche 1 bis 5 vorgesehen sind, und auch der rechteckige Bereich 15 (Testraster) mit den Unterbereichen 9 bis 13. Die Unterbereiche 9 bis 13 weisen dabei jeweils dieselbe Struktur auf wie die Unterbereiche 1 bis 5. Das heißt, die Perforation ist dort dieselbe. Die Dichte der Schraffur in den genannten Bereichen entspricht der Menge des Farbstoffs, welcher durch die Gravur hindurchtreten kann. Je enger die Schraffur dargestellt ist, desto mehr Farbstoff tritt hindurch.

Die Figur 5 zeigt gleiche Verhältnisse, jedoch bezogen auf die zweite Schablone des Schablonensatzes. Man erkennt, daß die Gravur bzw. der dreieckförmige Bereich 14 um 120° gegenüber dem Bereich 14 der ersten Schablone verdreht auf diese zweite Schablone aufgebracht ist. Außerdem ist der rechteckige Gravurbereich 15 gegenüberjenem in Figur 4 in Längsrichtung der Schablone versetzt, so daß dieser Bereich 15 auf einen Warenbahnabschnitt druckt, der nicht durch die Schablone der Figur 4 vorbenetzt ist.

In Figur 6 ist das Gravurbild des dreieckförmigen Bereichs 14 gegenüber dem Gravurbild des gleichen Bereichs in Figur 4 um 240° gedreht. Der rechteckförmige Bereich 15 ist abermals um ein Stück in Schablonenlängsrichtung versetzt und trifft dadurch wiederum nur trockene Warenbahnabschnitte, die nicht durch andere Farben vorbenetzt sind.

EP 0 632 645 A1

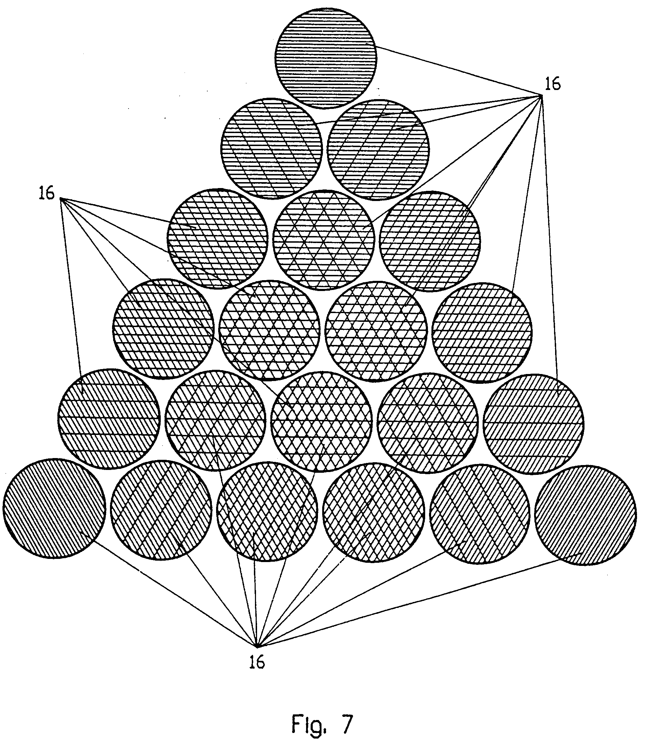

Druckt man die dargestellten Schablonengravuren auf eine Warenbahnprobe ab, so entsteht das Druckbild der Figur 7, zumindest soweit dies den dreieckförmigen Bereich 14 betrifft. Die einzelnen Farben sind hier durch die Richtung der Schraffur auseinandergehalten, wobei ihre jeweilige Menge oder Intensität wiederum durch die Dichte der Schraffur markiert ist. Da sich die drei Farben im Farbton unterscheiden, entsteht in jedem einzelnen der durch Überdruck entstandenen bunten Farbkreise 16 bzw. Rasterbereiche ein anderer Farbton, der nun mit Hilfe eines Farbscanners oder Spektrometers ausgemessen werden kann. Da gleichzeitig auch die jeweils aufgebrachten Farbmengen aus den rechteckigen Druckbereichen 15 ermittelt werden können, lassen sich mit diesem Verfahren alle Parameter bestimmen, die für die Auslegung einer Halbtongravur erforderlich sind.

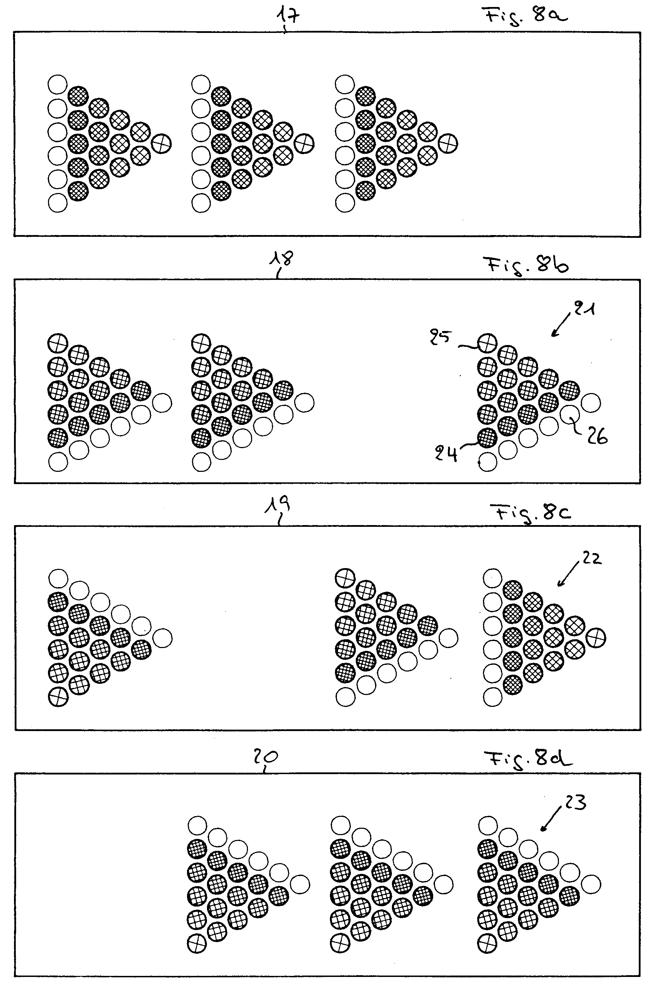

Die Figuren 8a bis 8d zeigen Abwicklungen von mit Gravuren versehenen Zylindermänteln von vier zu einem Schablonensatz gehörenden Rotationssiebdruckschablonen. Mit diesem Satz werden vier verschiedene Druckfarben im Mischdruck auf ein beliebiges textiles Substrat mitunterschiedlicher Intensität, also in verschiedenen Mengenanteilen, aufgebracht. Hier werden die Farben durch abgestufte Durchlässigkeiten der gravierten Bereiche in der Schablonenwand verschieden stark zurückgehalten.

Es bezeichnet 17 den abgewickelten Mantel der ersten Schablone, 18 jenen der zweiten Schablone und so fort. Schließlich bezeichnet 20 den Mantel der vierten Schablone. Mit diesen Schablonen wird auf einer in der Zeichnung nicht mehr dargestellten Siebdruckmaschine auf einer Warenbahn mit vier gewählten sich unterscheidenden Farben ein Farbdruck erstellt, bei welchem jeweils zwei oder drei Farben zu neuen Farbtönen gemischt werden. Warenbahn und die drucktechnischen Parameter werden völlig gleich jenen Werten gehalten, die bei dem ins Auge gefaßten späteren Druck einer künstlerischen bildhaften Vorlage gewählt werden sollen. Im einzelnen sind dies die Aufeinanderfolge der vier Farben, Art und Form der Druckrakel, Druckgeschwindigkeit, der Chemismus der Druckfarben (Farbstoff, Druckhilfsstoffe, rheologische Werte und pH-Wert) und die Art, Dauer und Temperaturführung der Nachbehandlungsprozesse (Trocknen, Dämpfen).

Die in den Figuren 8b bis 8d vertikal untereinanderliegenden Gravurbereiche 21, 22 und 23 werden auf der Warenbahn paßgenau ineinander abgedruckt. Gleiches geschieht mit den anderen vertikal untereinanderliegenden Gravurbereichen.

In allen diesen Bereichen sind die unterschiedlichen Durchlässigkeiten der Schablonenwand durch verschieden dichte Kreuzhaschuren angedeutet, weil der tatsächlich gewählte Raster der Perforation so klein ist, daß er in der Zeichnung bei dem gewählten Zeichenmaßstab nicht mehr dargestellt werden kann. Es bedeutet jedenfalls eine enge Haschur 24 eine geringe Durchlässigkeit und eine weite Haschur 25 eine große Durchlässigkeit. Dazwischen sind die Durchlässigkeiten abgestuft. Die dünn eingezeichneten Kreise 26 deuten undurchlässige Schablonenstellen an, die perforierten also durchlässige Druckbereiche. Durch die Gravurbereiche 21, 22 und 23 werden wiederumjeweils zwei bzw. 3 Farben im Mischdruck übereinanderliegend aufgetragen.

Das Gravurbild in jedem der kooperierenden Druckbereiche 21, 22 und 23 füllt auch hier die Fläche eines gleichseitigen Dreiecks aus. Man erkennt, daß die Durchlässigkeit der Perforation, jeweils von einer anderen Spitze eines Dreiecks ausgehend, in Richtung zur gegenüberliegenden Dreieckseite hin abnimmt.

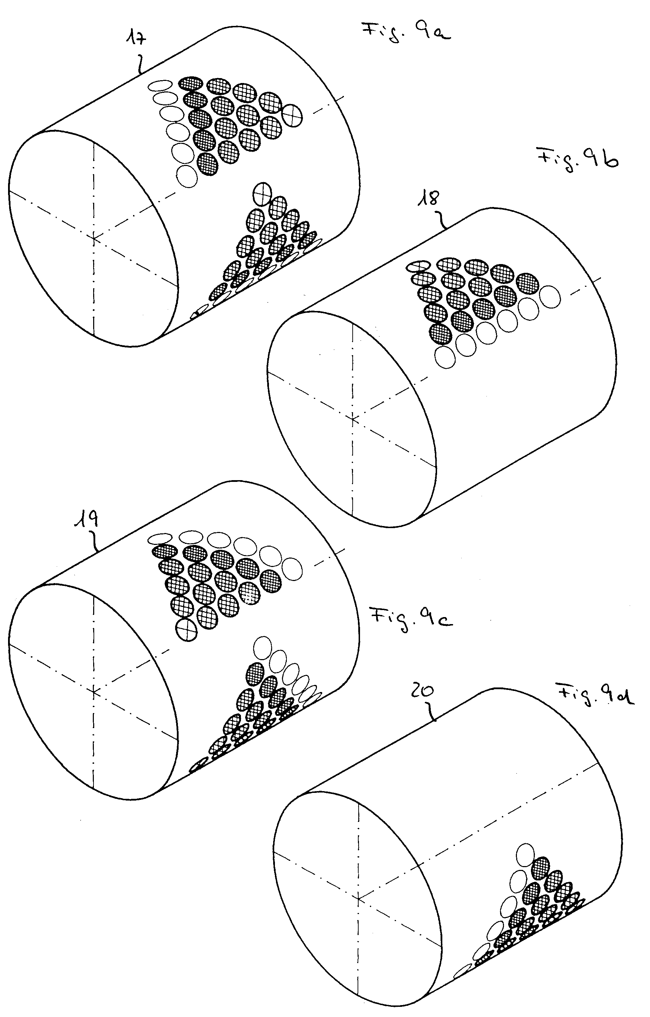

In den Figuren 9a bis 9d sind die vier Siebdruckschablonen 17 bis 20 in ihrer räumlichen Gestalt und deren Gravurbilder dargestellt, soweit letztere sichtbar sind. Diese Siebdruckschablonen 17 bis 20 entsprechen den abgewickelten Mänteln der Figuren 8a bis 8d.

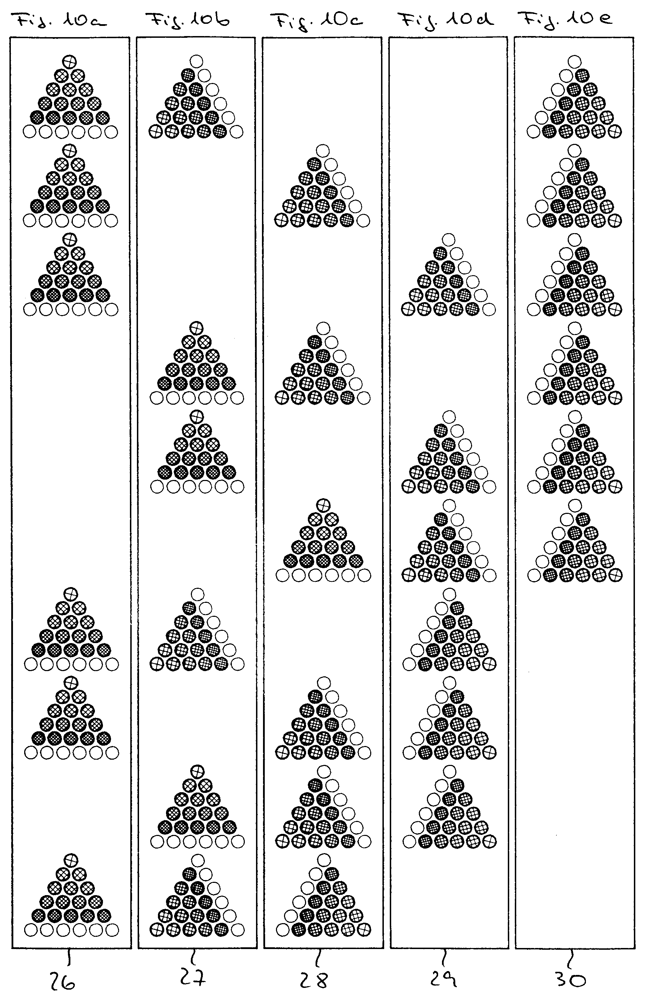

In den Figuren 10a bis 10e sind die Abwicklungen 26 bis 30 der Zylindermäntel eines Schablonensatzes dargestellt, der aus fünf Schablonen besteht. Jede dieser Schablonen druckt eine andere Farbe. Es werden hier also fünf Farben gedruckt. Jeweils zwei bzw. drei Farben werden auf der zu bedruckenden Warenbahn in der gleichen Weise gemischt, wie dies bei den Figuren 8a bis 8d erklärt wurde. Da die Abwicklungen 26 bis 30 der Zylindermäntel hier vertikal verlaufen, findet man die kooperierenden Druckbereiche jeweils in horizontalen Reihen.

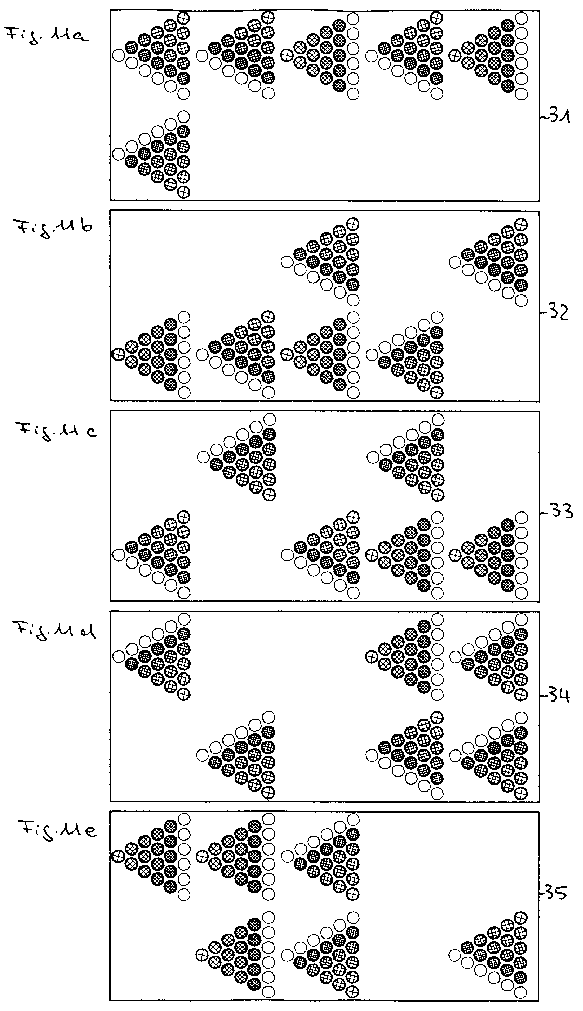

Die Figuren 11c bis 11e zeigen Schablonengravuren, die gegenüber den in den Figuren 10a bis 10e dargestellten ein wenig verändert wurden, um zu Schablonen kleinerer Länge aber dafür etwas größeren Durchmessers zu gelangen. Man erhält dann die Abwicklungen 31 bis 35, die den Abwicklungen 26 bis 30 in den Figuren 10a bis 10e entsprechen.

Alternativ zu der eingangs beschriebenen Korrektur unter Verwendung des Transformationspolynoms können zur Ermittlung der von den Farbmengenanteilen abhängigen Farbkorrekturwerte auch solche bei der farbmetrischen Vermessung der einzelnen Rasterbereiche der Warenbahnprobe erhaltenen Farbvektoren herangezogen werden, die jeweils zu den bei der punktweisen, farbmetrischen Vermessung der Vorlage ermittelten Farbvektoren am nächsten liegen.

Einem Farbvektor, der bei der Abtastung der künstlerischen Vorlage erhalten wird, braucht dann lediglich der nächstliegende Farbvektor der bei der Messung der Probe erhaltenen Farbvektoren zugeordnet zu werden, so daß auf diese Weise unmittelbar die Farbmengenanteile zur Reproduktion des entsprechenden Punkts der künstlerischen Vorlage zur Verfügung stehen.

Wird der von der künstlerischen Vorlage gemessene Farbvektor von mehreren Farbvektoren der Probe umgeben, so können letztere auch zur Interpolation eines geeigneten Proben-Farbvektors und damit zur Ermittlung geeigneter Farbmengenanteile durch Interpolation herangezogen werden. Bei der Interpolation können z. B. die den Farbvektor der Vorlage umgebenden Proben-Farbvektoren entsprechend ihrem Abstand vom VorlagenFarbvektor gewichtet werden.

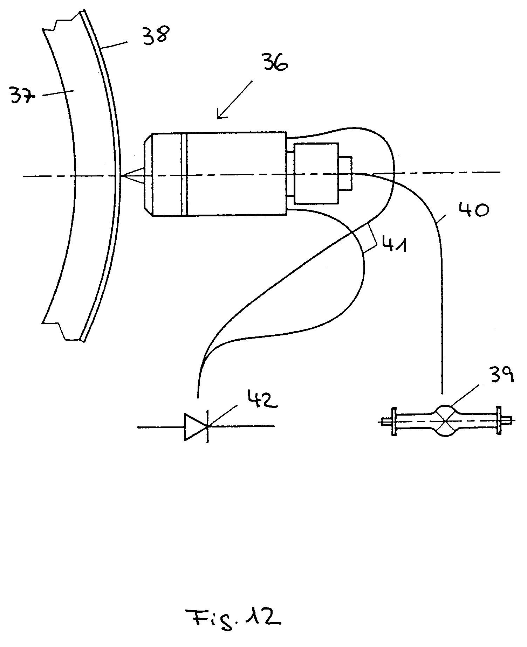

Die Figur 12 zeigt eine Anordnung zur farbmetrischen Vermessung der künstlerischen Vorlage oder der im Probedruck erhaltenen Rasterbereiche.

Ein optisches Abtastsystem mit einem optischen Abtastkopf 36 dient zur Abtastung der auf einem rotierenden Zylinder 37 befestigten künstlerischen Vorlage 38. Weißes Licht von einer Lichtquelle 39 gelangt in eine Lichtleitfaser 40, um mit diesem Licht die künstlerische Vorlage 38 (oder die Rasterbereiche des Probedrucks) punktförmig beleuchten zu können. Die Lichtquelle 39 kann z. B. eine Xenon-Hochdrucklampe sein. Mit Hilfe von Lichtleitfasern 41 wird an der künstlerischen Vorlage 38 reflektiertes Licht aufgefangen und zu einer Fotodetektoranordnung 42 übertragen, die farbselektive Eigenschaften aufweist. Um eine eindeutige Beziehung zwischen den von der Fotodetektoranordnung 42 gelieferten Signalen und der Position des Abtastlichtflecks auf der künstlerischen Vorlage 38 zu erhalten, sind die Abtastfrequenz bei der Vorlagenabtastung, die Bewegungsbahn des optischen Abtastkopfs 36, die Lage der künstlerischen Vorlage 38 auf dem Zylinder 37 und die Rotationsgeschwindigkeit des Zylinders 37 vorgegeben oder gespeichert.

Soll die künstlerische Vorlage 38 abgetastet werden, so wird sie zunächst auf den Zylinder 37 aufgespannt. Sie wird dann punktförmig mit Weißlicht von der Lichtquelle 39 beleuchtet. Das von der künstlerischen Vorlage 38 reflektierte Licht wird über die Lichtleitfasern 41 aufgefangen, wobei die Intensität des reflektierten Lichts in drei Wellenlängenbereichen gemessen wird, und zwar mit Hilfe der bereits erwähnten Fotodetektoranordnung 42. Die Meßwerte werden nachfolgend in digitale Werte umgewandelt und in einem elektronischen Speicher zwischengespeichert, bevor sie korrigiert werden. Die Wellenlängenbereiche, in denen gemessen wird, können zwischen 420 und 480 $\mu$m für die Farbe Blau, zwischen 480 und 570 $\mu$m für die Farbe Grün und zwischen 570 bis 650 $\mu$m für die Farbe Rot liegen. Diejeweiligen Intensitätswerte in diesen Wellenlängenbereichen entsprechen den Farbmengenanteilen.

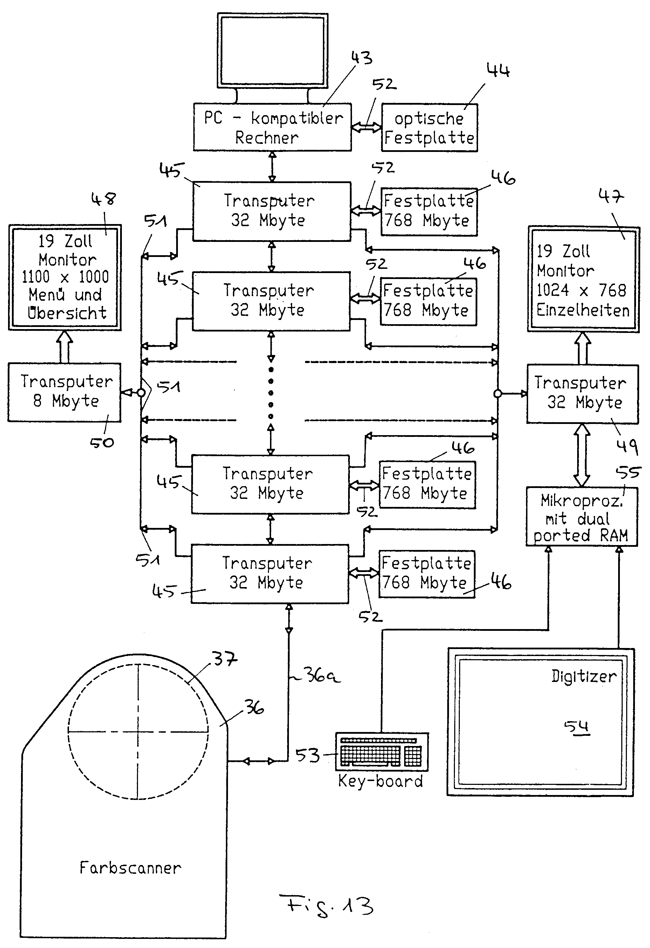

In der Figur 13 ist eine Abtast- und Datenverarbeitungseinrichtung dargestellt. Sie enthält zwei Großbildschirme, von denen einer zur Darstellung der Mustervorlage dient. Er zeigt ferner das Bedienmenue an und hat auch Platz für die Dialogein- sowie -ausgabe. Der andere Großbildschirm kann zur Darstellung eines zu bearbeitenden Ausschnitts der Mustervorlage dienen. Dies hat den Vorteil, daß alle für die Bearbeitung erforderlichen Musterdaten und Informationen gleichzeitig visuell verfügbar sind.

In Figur 13 bezeichnet 43 einen PC-kompatiblen Rechner mit seinem Eingabebildschirm, der als Bediensystem für den nachgeschalteten Anlagenteil dient. Dieser ist auch als Fileserver für eine optische Festplatte 44 vorgesehen, welche die fertig bearbeiteten Musterdaten speichert. Der nachgeschaltete Anlagenteil besteht im wesentlichen aus einer Mehrzahl von Transputern 45. Jeder dieser Transputer 45 besteht aus einer Zentralprozessoreinheit, die mit einem Floating-Point-Prozessor und einer Memory-Unit am gleichen Chip ausgerüstet ist. Am gleichen Board befindet sich ein 32 Mbyte großes RAM. Jedem dieser Transputer 45 ist eine eigene magnetische Festplatte 46 mit 768 Mbyte Speicherbereich zugeordnet. Beispielsweise werden vier derartige Einheiten verwendet. Dadurch ist es möglich, das zeilenweise von der Mustervorlage mittels des Farbscanners 36 gelesene Muster in Gruppen, die jeweils eine Vielzahl von Zeilen umfassen, von den einzelnen Transputern 45 bearbeiten zu lassen. Als Medium für die während der Bearbeitung anfallenden temporären Datenmengen ist jedem Transputer 45 die Festplatte 46 zugeordnet. Die Gesamtheit der Musterdaten wird demnach parallel auf mehrere Festplatten 46 aufgeteilt und ebenso parallel von den Transputern 45 bearbeitet.

Zur Veranschaulichung des Anarbeitungsstands dienen der Detailmonitor 47 und der Übersichtsmonitor 48. Der Detailmonitor 47 wird vom Videotransputer 49 angesteuert und der Übersichtsmonitor 48 vom Videotransputer 50.

Zum Zweck des Datenaustausches sind die Transputer 45 über sehr schnelle serielle bidirektionale Datentransferleitungen 51, auch Computerlinks genannt, untereinander verbunden. Die Datenübertragung von und zu den Festplatten 46 wird über eine 8 bit breite parallele Busleitung 52 durchgeführt. Diese zuletztgenannte Busleitung 52 ist zwischen jedem Transputer 45 und der zugeordneten Festplatte 46 gesondert geführt. Dies bedeutet, daß der Datentransfer zwischenjedem Transputer 45 und seiner Festplatte 46 so gehandhabt werden kann, daß der Verkehr aller übrigen Transputer 45 und Ihrer Festplatten 46 nicht beeinträchtigt wird und so auf die schnellst mögliche Weise abgewickelt werden kann.

Der Videotransputer 49 hat die Aufgabe, die Daten des gerade aktuellen Mustervorlagenausschnitts dem Detailmonitor 47 zu übermitteln. Zu diesem Zweck ist er mit einem 32 Mbyte großen RAM ausgerüstet. Außerdem obliegt ihm die Aufgabe, die Eingabedaten vom Keyboard 53 und auch die vom Digitizer 54 zu verarbeiten. Damit dieser von der Überwachung der Eingabegeräte Keyboard 53 und Digitizer 54 entbunden ist, wird eine eigenständige Mikroprozessor-Kontrollkarte 55 vorgesehen, die laufend überwacht, ob und von wo Daten eingegeben werden. Diese Mikroprozessor-Kontrollkarte 55 ist mit einem dual ported RAM ausgerüstet, damit Daten sowohl vom Transputer 49 als auch vom Mikroprozessor, der auf der gleichen Karte 55 vorgesehen ist, in den Speicherbereich dieser Karte 55 eingetragen oder von diesem Speicherbereich gelesen werden können.

Sowohl die bei der farbmetrischen Vermessung der künstlerischen Vorlage erhaltenen Daten als auch die bei der farbmetrischen Vermessung des Probedrucks erhaltenen Daten werden über eine Datentransferleitung 36a vom Farbscanner 36 zu den Transputern 45 geliefert. Dabei führen die Transputer 45 die Berechnungen zur Ermittlung der Farbmengenanteile a1, a2 und a3 der Basisfarben F1 bis F3 für denjeweils abgetasteten Farbton der künstlerischen Vorlage durch, also die Korrektur der bei der Abtastung der künstlerischen Vorlage erhaltenen Farbvektoren. Diese Farbmengenanteile werden dann entweder auf der Festplatte 44 oder in anderen Speichern der Transputer 45 gespeichert. Sie lassen sich später aufrufen, um mit ihrer Hilfe die künstlerische Vorlage auf der genannten Warenbahn reproduzieren zu können, wie bereis beschrieben. Dazu lassen sich mit Hilfe dieser Farbmengenanteile Lochgrößen in Siebdruckschablonen für die jeweiligen Farben vorgeben, oder, falls die künstlerische Vorlage durch Farbdüsen reproduziert werden soll, Spritzdrucke, Düsenöffnungszelten, und dergleichen.

Es sei noch darauf hingewiesen, daß selbstverständlich auch der Probedruck gemäß Figur 7 nicht nur unter Verwendung von Siebdruckschablonen sondern auch mit Hilfe von Farbspritzdüsen hergestellt werden kann. Die Farbmengenanteile in den unterschiedlichen Rasterbereichen lassen sich in einem solchen Fall durch unterschiedliche Aufspritzzeiten und/oder Aufspritzdrucke vorgeben.

**Patentansprüche**

1. Verfahren zur Erstellung eines Datensatzes zur Reproduktion einer Vorlage auf einer Warenbahn, **gekennzeichnet durch** folgende Schritte:
   - auf einer Probe der Warenbahn werden in jeweils vorbestimmten Rasterbereichen (16) Basisfarben (F1, F2, F3) in unterschiedlichen Farbmengenanteilen (a1, a2, a3) übereinanderliegend aufgebracht,
   - die einzelnen Rasterberelche (16) werden farbmetrisch vermessen, um von den Farbmengenanteilen (a1, a2, a3) abhängige Farbkorrekturwerte zu ermitteln,
   - es erfolgt eine punktweise, farbmetrische Vermessung der Vorlage, um jeweils Farbwerte der Vorlage zu ermitteln,
   - die ermittelten Farbwerte werden durch die Farbkorrekturwerte korrigiert, um fürjeden Punkt der Vorlage korrigierte Farbmengenanteile zu erhalten, und
   - es werden die korrigierten Farbmengenanteile gespeichert.

2. Verfahren nach Anspruch 1, **dadurch gekennzeichnet,** daß drei Basisfarben verwendet werden, die allein, paarweise und zu dritt in den Rasterbereichen (16) aufgebracht werden.

3. Verfahren nach Anspruch 1, **dadurch gekennzeichnet,** daß mehr als drei Basisfarben verwendet werden, von denen jeweils drei in einer Gruppe allein, paarweise und zu dritt in den Rasterberelchen (16) aufgebracht werden.

4. Verfahren nach Anspruch 1, 2 oder 3, **dadurch gekennzeichnet,** daß zur Ermittlung der von den Farbmengenanteilen abhängigen Farbkorrekturwerte die bei der farbmetrischen Vermessung der einzelnen Rasterbereiche (16) der Warenbahnprobe erhaltenen Farbvektoren mit solchen verglichen werden, die sich aufgrund einer farbvektoriellen Rechnung unter Zugrundelegung der Mengenanteile der Basisfarben für den jeweiligen Rasterbereich (16) ergeben.

5. Verfahren nach Anspruch 1, 2 oder 3, **dadurch gekennzeichnet,** daß zur Ermittlung der von den Farbmengenanteilen abhängigen Farbkorrekturwerte solche bei der farbmetrischen Vermessung der einzelnen Rasterbereiche (16) der Warenbahnprobe erhaltenen Farbvektoren herangezogen werden, die jeweils zu den bei der punktweisen, farbmetrischen Vermessung der Vorlage ermittelten Farbvektoren am nächsten liegen.

**6.** Verfahren nach Anspruch 5, **dadurch gekennzeichnet,** daß als nächstliegende Farbvektoren solche herangezogen werden, die durch Interpolation mehrerer Farbvektoren von Rasterbereichen (16) der Warenbahnprobe ermittelt worden sind, welche zum Farbvektor der Vorlage benachbart liegen.

**7.** Verfahren nach einem der Ansprüche 1 bis 6, **dadurch gekennzeichnet,** daß zur quantitativen Bestimmung der Farbmengenanteile der in den Rasterbereichen (16) vorhandenen Basisfarben die jeweiligen Basisfarben in gleicher Weise außerhalb eines durch die Rasterbereiche (16) definierten Testrasters (15) separat auf die Probe der Warenbahn aufgebracht werden.

**8.** Verfahren nach einem der Ansprüche 1 bis 7, **dadurch gekennzeichnet,** daß die Basisfarben mittels einer Lochschablone auf die Probe der Warenbahn aufgedruckt werden.

**9.** Verfahren nach Anspruch 8, **dadurch gekennzeichnet,** daß die Farbmengenanteile durch unterschiedliche Lochgrößen der Lochschablone vorgegeben werden.

**10.** Verfahren nach Anspruch 8 oder 9, **dadurch gekennzeichnet,** daß daß die Farbmengenanteile durch unterschiedliche Lochdichten der Lochschablone vorgegeben werden.

**11.** Verfahren nach einem der Ansprüche 1 bis 7, **dadurch gekennzeichnet,** daß die Basisfarben mittels einer Düseneinrichtung auf die Probe der Warenbahn aufgespritzt werden.

**12.** Verfahren nach Anspruch 11, **dadurch gekennzeichnet,** daß die Farbmengenanteile durch unterschiedliche Aufspritzzeiten und/oder Aufspritzdrucke vorgegeben werden.

**13.** Siebdruckschablone zur Durchführung des Verfahrens nach einem der Ansprüche 1 bis 10, **gekennzeichnet durch** wenigstens einen Raster (14) mit mehreren gleichgroßen und in Form eines gleichseitigen Dreiecks angeordneten Rasterbereichen (16), die jeweils eine Durchlässigkeit aufweisen, die rasterbereichsweise von einer Spitze des Dreiecks in Richtung zur gegenüberliegenden Dreiecksseite hin abnimmt.

**14.** Siebdruckschablone nach Anspruch 13, **dadurch gekennzeichnet,** daß die Zahl der Rasterbereiche (16) entlang einer Seitenkante des Dreiecks (14) mindestens vier beträgt.

Fig. 1

Fig. 2

Fig. 3a

Fig. 3b

Fig. 4

Fig. 5

Fig. 6

Fig. 7

17

Fig. 8a

18

Fig. 8b

19

Fig. 8c

20

Fig. 8d

17

Fig. 9a

Fig. 9b

18

19

Fig. 9c

20

Fig. 9d

Fig. 10a    Fig. 10b    Fig. 10c    Fig. 10d    Fig. 10e

26    27    28    29    30

Fig. 11a

~31

Fig. 11b

~32

Fig. 11c

~33

Fig. 11d

~34

Fig. 11e

~35

Fis. 12

43

52

44

PC – kompatibler
Rechner

optische
Festplatte

45

52

46

48

Transputer
32 Mbyte

Festplatte
768 Mbyte

51

19 Zoll
Monitor
1100 x 1000
Menü und
Übersicht

45

52

46

Transputer
32 Mbyte

Festplatte
768 Mbyte

47

19 Zoll
Monitor
1024 x 768
Einzelheiten

51

Transputer
8 Mbyte

Transputer
32 Mbyte

50

49

46

55

45

Transputer
32 Mbyte

Festplatte
768 Mbyte

52

Mikroproz.
mit dual
ported RAM

51

45

Transputer
32 Mbyte

Festplatte
768 Mbyte

46

52

37

36a

36

53

Key-board

Digitizer

54

Farbscanner

Fig. 13

22

Europäisches
Patentamt

**EUROPÄISCHER RECHERCHENBERICHT**

Nummer der Anmeldung

EP 93 11 0370

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 421 003 (GRAPHO METRONIC MESS- UND REGELTECHNIK GMBH) <br> * das ganze Dokument * <br> --- | 1,4 | H04N1/46 |
| A | EP-A-0 408 507 (GRETAG AKTIENGESELLSCHAFT) <br> * Zusammenfassung; Abbildungen * <br> --- | 1 | |
| A | EP-A-0 529 967 (IRIS GRAPHICS) <br> * Seite 3, Zeile 4 - Zeile 10 * <br> * Seite 6, Zeile 9 - Seite 8, Zeile 6 * <br> * Zusammenfassung; Abbildungen * <br> --- | 1 | |
| A | US-A-4 959 669 (HANEDA ET AL) <br> * Zusammenfassung; Anspruch 1; Abbildung 15 * <br> --- | 1 | |
| A | US-A-4 203 360 (MADWED) <br> * Spalte 2, Zeile 34 - Spalte 3, Zeile 34 * <br> * Zusammenfassung; Abbildungen * <br> --- | 1 | |
| A | US-A-4 481 532 (CLARK ET AL) <br> ----- | | |

RECHERCHIERTE SACHGEBIETE (Int.Cl.6)

H04N
B41M
B41F

Der vorliegende Recherchenbericht wurde für alle Patentansprüche erstellt

| Recherchenort | Abschlußdatum der Recherche | Prüfer |
|---|---|---|
| DEN HAAG | 29. November 1993 | Isa, S |

EPO FORM 1503 03.82 (P04C03)